# EUROPEAN PATENT SPECIFICATION

(11) **EP 3 058 851 B1**
(45) Date of publication and mention of the grant of the patent: **02.05.2018**
(21) Application number: 15194030.1
(22) Date of filing: 11.11.2015
(51) Int. Cl.: A47C 27/08, A47C 7/46, B60N 2/66

(54) **THORACIC REGION COMFORT SEATING SYSTEM**
SITZSYSTEM MIT KOMFORT FÜR DEN THORAXBEREICH
SYSTÈME D'ASSISE DE CONFORT DE LA RÉGION THORACIQUE

(30) Priority: 04.12.2014 US 201414560811
(43) Date of publication of application: 24.08.2016
(73) Proprietor: Lear Corporation, Southfield MI 48033 (US)
(72) Inventor: GALBREATH, Ashford Allen, Troy, MI 48098 (US); HARBAUGH, Richard L., South Lyon, MI 48178 (US)
(74) Representative: Grünecker Patent- und Rechtsanwälte PartG mbB

(56) References cited:
- WO-A1-2014/031819
- WO-A2-2014/066493
- US-A- 3 652 126

## Description

The present application is directed to a thoracic region support system for a seatback.

In a seated position, the thoracic region of a person's spine is required to support much of the person's upper body mass. When seated for extended periods of time, such as at a desk or on an airplane, the muscles of the person's upper body and vertebrae and discs in the lumbar region and pelvic region of the spine can become significantly fatigued.

From WO 2014/066 493 A2, a seat comprising a thoracic support structure is known. The thoracic support structure is pivotally attached to a seat back of the seat for movement between a first position and a second position. An inflatable bladder is disposed between a support surface of the seat back and the thoracic support structure, such that the thoracic support structure pivots when the bladder is inflated. When the thoracic support structure is pivoted to the second position, it supports at least a portion of the thoracic region of a user's spine.

WO 2014/031819 A1 discloses a thoracic support for a seat back of a seat. The support comprises a centre portion extending in an upright direction and a pair of side portions disposed adjacent to and connected with the centre portion. The centre portion has a greater hardness than the side portions so that the centre portion provides support to at least a portion of the thoracic region of the user's spine.

It is the object of the invention to provide an improved thoracic support for a seat back.

This object is achieved by the subject matter of claim 1. The dependent claims describe advantageous embodiments of the invention.

### BRIEF DESCRIPTION OF THE DRAWINGS

FIG. 1 illustrates a front perspective view of an example of an adjustable support system for a seatback according to one embodiment of the present disclosure;
FIG. 2 is a schematic illustration of the thoracic support structure for the adjustable support system of FIG. 1 according to one embodiment;
FIG. 3A is a section view of the thoracic support structure of FIG. 2;
FIG. 3B is a section view of the thoracic support structure of FIG. 2;
FIG. 3C illustrates a portion of the filaments and mesh spacer material;
FIG. 4 is a section view of the thoracic support structure of FIG. 2;
FIG. 5 is a schematic illustration of the thoracic support structure for the adjustable support system of FIG. 1 according to another embodiment;
FIG. 6A is a section view of the thoracic support structure of FIG. 5;
FIGURE 6B is a section view of the thoracic support structure of Figure 5;
FIGURE 7 is a section view of the thoracic support structure of Figure 5;
FIGURE 8 is a schematic illustration of the thoracic support structure for the adjustable support system of Figure 1 according to another embodiment;
FIGURE 9A is a section view of the thoracic support structure of Figure 8;
FIGURE 9B is a section view of the thoracic support structure of Figure 8;
FIGURE 10 is a schematic illustration of the thoracic support structure for the adjustable support system of Figure 1 according to another embodiment;
FIGURE 11 is a section view of the thoracic support structure of Figure 10;
FIGURE 12 is a section view of the thoracic support structure of Figure 10;
FIGURE 13 illustrates a rear perspective view of the adjustable support system of Figure 1 according to one embodiment;
FIGURE 14 illustrates a rear perspective view of the adjustable support system of Figure 1 according to another embodiment;
FIGURE 15 illustrates a rear perspective view of the adjustable support system of Figure 1 according to another embodiment; and
FIGURE 16 illustrates a rear perspective view of an adjustable support system for a seatback according to the one embodiment.

### DETAILED DESCRIPTION

As required, detailed embodiments of the present invention are disclosed herein; however, it is to be understood that the disclosed embodiments are merely examples of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

Moreover, except where otherwise expressly indicated, all numerical quantities in this disclosure are to be understood as modified by the word "about" in describing the broader scope of this invention. Practice within the numerical limits stated is generally preferred. Also, unless expressly stated to the contrary, the description of a group or class of materials by suitable or preferred for a given purpose in connection with the invention implies that mixtures of any two or more members of the group or class may be equally suitable or preferred.

It is believed that supporting the thoracic region of the spine can reduce forces and support as much as one-third of the upper body mass. By increasing support of the upper body mass, loads are reduced on the muscles, vertebrae and discs in the lumbar region and pelvic region of the spine. Decreased load reduces fatigue on these areas of the body. The current prevalent comfort back supporting technology for the furniture and transportation markets focuses on the lumbar (lower) region of the back to provide relief from fatigue. With the change from a primarily labor intensive work force to one of computer using desk workers we see an increase in upper back discomfort and a decrease in lower back discomfort. This is driving the need for an improvement in the location of the seating support system designed to provide relief for fatigue and the resultant discomfort.

A comfort seating system for seating for furniture or comfort vehicular seating systems, such as in office, automotive or aircraft seating, provides supporting pressure along the thoracic region of the user's spine between the T2 to T12 vertebrae. This system can be static, non-adjustable, or adjustable to accommodate a wider variety of user sizes.

The support structure is to be positioned along the thoracic region of a seat back when the user is seated. In at least one embodiment, the support structure has a stiffer center portion and softer side portions. In this embodiment, the center portion is intended to provide spinal support while the side portions are designed to allow the scapular area along either side of the spine to sink in with less resistance than in the center portion.

In at least this embodiment, the support structure is an inflatable bladder that is inflated to have different stiffness regions so that the center portion has a higher stiffness or less forward travel resulting a more stiff feeling to the user than the side portions. The support structure can be used in a variety of seating systems. Some exemplary seating systems and components are shown and described below.

There are four main factors that affect subjective comfort: 1) smoothness of the pressure integral; 2) sufficiency of the pressure change; 3) ability to create even pressure for a wide range of anthropometry; and 4) ergonomic/control suitability of actuation.

A thoracic region comfort seating system design is focused on addressing subjective comfort factors. Smoothness of the pressure integral is accomplished by having a centroid of supporting high pressure with a lower pressure zone surrounding either side of the central support to promote a feeling of smooth transition from center to outer sides. In this manner, the user will experience relatively little discomfort from feeling the hardness transition between parts of the design. In addition, by supporting the thoracic region, the user's muscular ligamentous structures are supported which may increase biomechanical abilities and efficiencies for the muscular, physiological and neurological systems.

Sufficiency of the pressure change and the need to create even pressure for a wide range of anthropometry can be accommodated by either having the degree of pressure adjustable, or if not adjustable, designed for a fiftieth-percentile male and female population location of the thoracic region, thereby minimizing the possibility of larger or smaller users experiencing discomfort. Ergonomic control and suitability of actuation may be accomplished by having the ability to control pressure and location by moving the adjustable unit up, down, forward and rearward with intuitive hand controls.

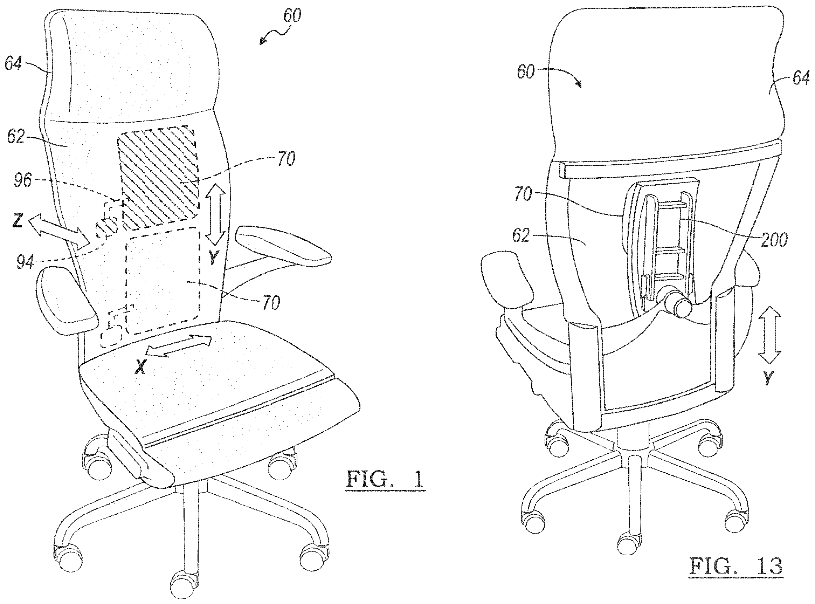

As shown in Figure 1, the adjustable support system 60 includes an adjustable thoracic support structure 70 positioned along the seatback 62. The thoracic support structure 70 has a generally rectangular shape. The thoracic support structure 70 is adjustable in the vertical or upright direction, as indicated by arrow Y. The ability to coordinate the placement of thoracic support structure 70 has impact on the comfort factors. Being able to vary the location of the thoracic support structure 70 up and down along the seatback 62 also improves the ability to address large anthropometric variation in the population. The seatback 62 may also include a headrest portion 64 located adjacent the thoracic support structure 70 in the upright direction.

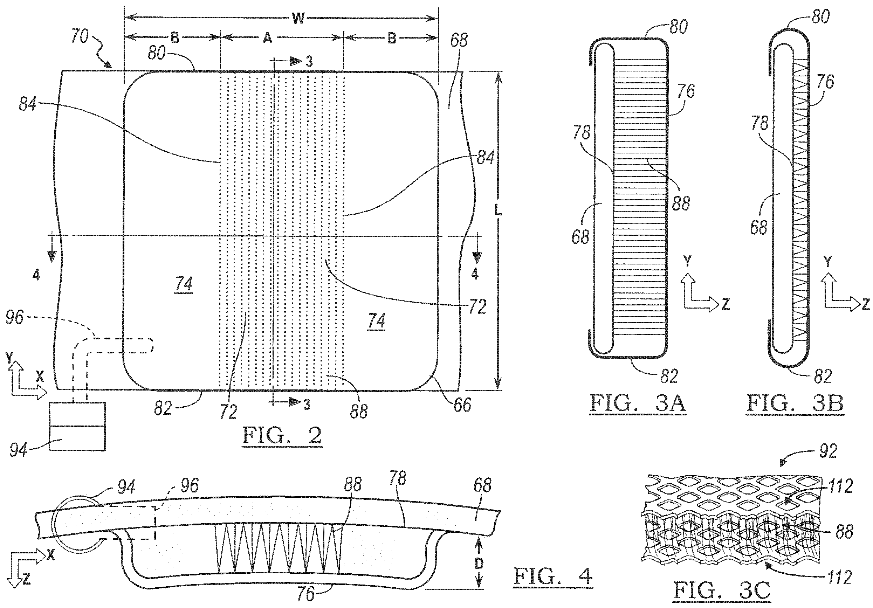

Figure 2 illustrates a schematic view of the adjustable thoracic support structure 70. The thoracic support structure includes an inflatable bladder 66. The inflatable bladder 66 includes a forward surface 76 and a rearward surface 78. The forward surface 76 is positioned underneath or behind the seatback 62 so that it is the surface closest to the seated user.

If the chair has a seatback 62 that has leather or fabric trim, the adjustable thoracic support structure 70 may be embedded in a foam cushion behind the fabric trim or in a compartment behind the foam cushion of the seatback 62. If the chair has a seatback 62 formed of a mesh material, the thoracic support structure 70 may be positioned behind the mesh material. The rearward surface 78 is opposite the forward seating surface 76 and faces away from user. While the Figures illustrate an office chair, the thoracic support structure 70 may be incorporated in the seatback for automotive or transportation seating applications, leisure seating applications or any other suitable seatback where thoracic support is desired.

The forward surface 76 is formed of thin pliable membrane to form a convex contoured shape when inflated. The rearward surface 78 may be formed of a thicker and/or stiffer backing material. The membrane of the forward seating surface 76 is wrapped and attached to the rearward surface 78 to create a seal to allow the bladder 66 to be inflated. The rearward surface 78 may be supported by a back strap 68 which provides increased rigidity. The membrane of the forward surface 76 may also be attached to the back strap 68 so that the forward surface 76 lays more flat against the rearward surface 78 and back strap 68 when deflated. The membrane of the forward surface 76 expands in the fore-aft direction Z away from the back strap and rearward surface 78 when inflated.

The forward surface 76 of the bladder 66 may be formed of a flexible, soft feeling thermoplastic olefin, urethane, polypropylene, mylar, nylon, polyethylene, polyvinylchloride or other sheet polyolefin. The rearward surface 78 of surface is generally more stiff or rigid than the forward surface 76 of the bladder 66 and can be made of the same or a different material.

The adjustable thoracic support structure 70 has a center portion 72 and outer side portions 74. The center portion 72 includes a plurality of filaments 88 that extend from the rearward surface 78 to the forward seating surface 76. The filaments 88 may be individual fabric strands, or a plurality of filaments 88 may be woven to form a filament spacer-like fabric. When inflated, the center portion 72 is stiffer than the outer side portions 74. The higher stiffness of the center portion 72 is more supportive and has more resistance to deflection when the user sits against the seatback 62. The center portion 72 provides support to the thoracic region of the user's spine when inflated to a support. The side portions 74 are softer and less stiff and provide shoulder blade relief to the user.

The outer portions 74 may be formed along the lateral sides 84 of the center portion 72. It is also contemplated that the outer portions 74 can enclose the center portion 72 surrounding the periphery of the center portion 72. As illustrated, the center portion 72 and outer side portions 74 may be rectangular shaped. However, the center portion 72 may be any suitable shape, such as oblong, diamond-shaped, cylindrical, triangular, elliptical, tear-shaped or trapezoidal, for example.

In the illustrated embodiment, the thoracic support structure 70 has a vertical length L of generally approximately 190 millimeters, a width W along the top 80 the bottom 82 of approximately 190 millimeters. In another embodiment, the support structure 70 has a maximum overall width W of 100 to 400 millimeters and a length L of 100 millimeters up to 550 millimeters. In at least one embodiment illustrated in Figure 2, the center portion 72 has a constant width A of approximately 80 millimeters. In another embodiment, the center portion 72 has a width A of 60 millimeters to 120 millimeters wide. Depending on the overall width W, with the side portions 74 can have a width B of 20 millimeters to 200 millimeters.

In at least the illustrated embodiment in Figure 2, the thoracic support structure 70 is the shape of a square or of a rectangle having a low aspect ratio. It is also contemplated however that the thoracic support structure 70 may have any suitable shape such as, but not limited to, a rectangle having a higher aspect ratio, a trapezoid, an inverted trapezoid, a triangle, a circle, or other suitable shape.

Figure 3A and Figure 3B show a vertical cross section of the thoracic support structure 70 through section 3-3 in Fig. 2. In the vertical cross-section in Figure 3A, the bladder 66 is inflated and the forward seating surface 76 is extended away from the back strap 68 and the rearward surface 78. In the vertical cross-section in Figure 3B, the bladder 66 is deflated.

Figure 4 shows a horizontal cross-section of the thoracic support structure 70 where the bladder is inflated. When inflated, the center portion 72 may have a thickness D being approximately 26 millimeters. In another embodiment, the inflated depth D of the center portion 72 may be from 15 millimeters to 40 millimeters.

In the embodiment pictured in Figure 4, the center portion 72 may have a generally constant thickness when inflated. In another embodiment, the center portion 72 may have a thickness that is less than the thickness of the outer side portions 74, as discussed below.

The center portion 72 has a stiffness being greater than the stiffness of the side portions 74. Stiffness is understood as the resistance to deformation of an elastic medium when acted upon by a steady force. By having a greater stiffness in the center portion 72, the user is provided with greater support along the user's spine, which is generally aligned with the center portion 72. The side portions 74 provide support to the user's scapula, but with less stiffness. The side portions 74 are more flexible and deform more than the center portion 72 when the applicant is seated against the thoracic support structure 70.

In at least one embodiment, the stiffness of the center portion 72 may be generally 100% to 250% more than the stiffness of the side portions 74. The stiffness of the center portion 72 and side portions 74 can also vary depending on characteristics of the seatback 62 in which the thoracic support structure 70 is utilized. In another embodiment, the stiffness of the center portion 72 may be 150% to 200% more than the stiffness of the side portions 74, while the center portion 72 is 100% greater than a stiffness of the seatback 62.

In one embodiment, the filaments 88 are formed of polyester fibers. The filaments 88 may be formed of any suitable non-elastic material that has some resistance to bending along the length of the filament and can be adhered to the forward surface 76 and the rearward surface 78 of the bladder 66.

The filaments 88 may be formed as a mesh spacer fabric 92, as illustrated in Fig. 3C. The woven mesh fabric 92 has opposing woven mesh surfaces 112 and the filaments 88 extend between the mesh surfaces 112. In one embodiment, the filaments 88 extend generally perpendicular to the mesh surfaces 112. In another embodiment, the filaments 88 extend from the mesh surfaces 112 at a non-zero angle toward the opposing mesh surface 112.

In one embodiment, the mesh spacer material 92 is formed of polyester where the filaments are woven to have a denier in the range of 10 to 500 and a weight of 300 to 2000 grams per square meter of fabric. The mesh spacer material 92 has be a thickness being at least the length of the filaments from three to 30 millimeters. The mesh spacer fabric 92 may have different denier, weight, or thickness in order to provide different stiffness characteristics of the center portion 72 when the bladder 66 is inflated.

The mesh surfaces 112 of the spacer material 92 allow the mesh surfaces 112 to be attached to the forward seating surface 76 and the rearward surface 78 of the bladder, respectively. The mesh surfaces 112 may be adhered to the forward seating surface 76 and the rearward surface 78 of the bladder 66 with adhesives, or bonded thermally with the use of heat, for example. It is contemplated that other suitable materials for the filaments 88 which can be woven to form a mesh spacer fabric and can be attached to the bladder 66 may be used to achieve the desired stiffness along the center portion 72.

The filaments 88 do not form a solid barrier between the center portion 72 and the side portions 74. Therefore, the bladder 66 is essentially one single chamber and airflow throughout the bladder 66 is not restricted by the filaments 88. The filaments 88 permit air distribution in all directions, even under inflation pressure. As such, only one inflation device is required to inflate the center portion 72 and the side portions 74. The inflation device includes a pump 94, or other inflator, and a port 96 connected between the pump 94 and the bladder 66 for supplying air. The port 96 may be flexible hose or tubing that can be extended as the thoracic support is positioned in the upright direction Y.

In at least one embodiment, the bladder 66 is inflated to a pressure between 0.2 and 8 pounds per square inch (PSI) (≈ 1379 - 55158 Pascal). In at least one other embodiment the bladder 66 is inflated to between 0.2PSI and 5 PSI (≈ 1379 - 34474 Pascal).

The filaments 88 in the center portion 72 increase the stiffness of the center portion 72 because the filaments 88 constrain the inflation and deformation of the center portion 72. In contrast, the side portions 74, which are not provided with any filaments, are not constrained to inflate or deform when force is applied by the user.

For example, when the bladder 66 is inflated, the side portions 74 may inflate and expand more since the side portions 74 are not constrained by the filaments 88 that are connected between the forward surface 76 and the rearward surface 78 of the bladder 66. When the center portion 72 is inflated, the filaments 88 that extend between the forward surface 76 and the rearward surface 78 of the bladder 66 prevent the center portion 72 from expanding. Since the air pressure inside the bladder 66 is the same across the center portion 72 and the side portion 74, the less expansion in the center portion 72 increases the stiffness in the center portion 72.

In Figure 2, the filaments 88 extend continuously across the center portion 72 to provide a generally uniform stiffness from the top 80 to the bottom 82 of the thoracic support 70.

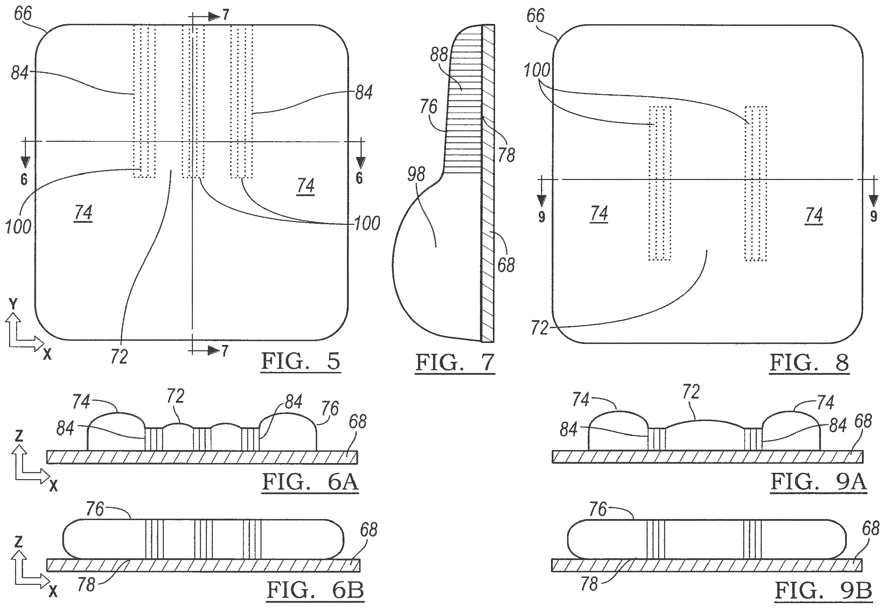

In Figure 5, the filaments 88 only extend partially along the upright length L. The filaments 88 extend from the top 80 to a mid-portion of the thoracic support 70. In addition to the side portions 74, the bladder includes a lower portion 98 that is also less stiff than the center portion 72. The lower portion 98 has the same as stiffness as the side portions 74.

Figure 6A and 6B are a section view through section 6-6 of Figure 5 when the bladder 66 is inflated. As shown in Figure 6A, the side portions 74 have an inflated thickness that is greater than the thickness of the center portion 72.

Figure 6B illustrates the shape change in the side portions 74 when a user applies pressure to the bladder 66 by sitting against the thoracic support 70. The side portions 74 are softer and less stiff than the center portion 72 and change shape with pressure from the user against the forward surface 76. The forward surface 76 changes so that the thickness of the side portions 74 is decreased and the width of the side portions 74 is increased.

Figure 7 is a section view through section 6-6 of Figure 5 when the bladder is inflated. As shown in Figure 7, the lower portion 98 has an inflated thickness that is greater than the thickness of the center portion 72. The lower portion 98 may provide additional lift of the thoracic region of the user's spine. The side portions 74 and lower portion 98 form a continuous U-shaped increased thickness inflation area, as shown in Figure 5.

In Figure 8, the filaments 88 are positioned as spaced apart filament material strips 100. The filament material strips 100 are spaced apart by a region without filaments 102. The filament material strips 100 extend in the upright direction Y and are spaced apart in a transverse direction X. The filament material strips 100 may extend from the top 80 to the bottom 82 of the thoracic support 70, or a portion of that distance.

Figure 9A and 9B are a section view through section 9-9 of Figure 8 when the bladder 66 is inflated. As shown in Figure 9A, the side portions 74 have an inflated thickness that is greater than the thickness of the center portion 72. The center portion 72 may include an intermediate center region 104 that does not have any filaments. The intermediate center region 104 that has an inflated thickness that is greater than the thickness at the filament material strips 100. However, the inflated thickness of the intermediate center region 104 is less than the side portions 74.

Figure 9B illustrates the shape change in the side portions 74 when the user applies pressure to the bladder 66 by sitting against the thoracic support 70. The side portions 74 are softer and less stiff than the center portion 72 and the intermediate center region 104. The side portions 74 change shape with pressure from the user against the front surface 76. The front surface 76 changes so that the thickness of the side portions 74 is decreased and the width of the side portions 74 is increased.

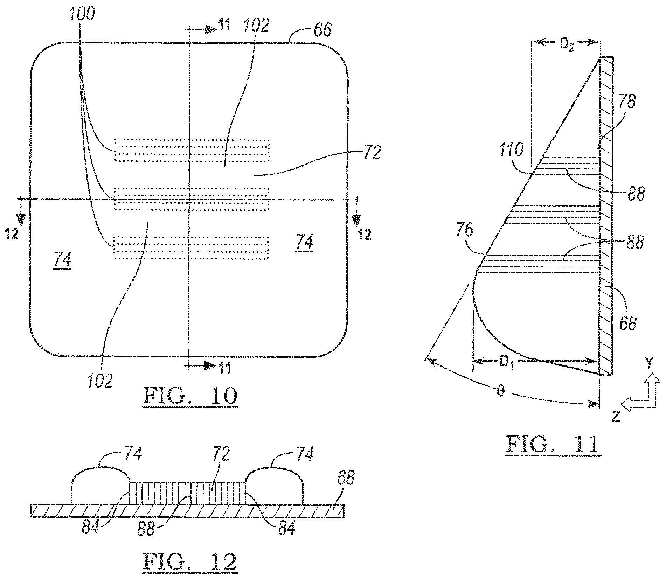

In the embodiment in Figure 10, the filaments 88 are positioned as spaced apart filament material strips 100. The each of filament material strips 100 are spaced apart by a region without filaments 102. The filament material strips 100 extend in the transverse direction X and are spaced apart in the upright direction Y. The filament material strips 100 only extend along the center portion 72 of the thoracic support 70.

As shown in the section view in Figure 11, the filaments 88 in each of the filament material strips 100 have various lengths in the fore-aft direction Z. The length of the filaments 88 decreases in the upright direction Y to define an angled support surface 110 when inflated. When inflated, the support bladder 66 has a lower thickness D1 being greater than an upper thickness D2. In one example, the lower thickness D1 at the first filament material strip may be twelve millimeters, while the upper thickness D2 at a second material strip may be four millimeters. There may be intermediate filament material strips with intermediate lengths. In another embodiment, the filaments 88 may be joined on a continuous mesh material where the filament length varies continuously.

As shown in Figure 11, a lift angle θ is defined between the rearward surface 78 and the angled forward seating surface 76. The lift angle θ may provide additional support to the thoracic region of the user's spine. In the example above, the lift angle would be 3.6 degrees. Based on the upright length L of the bladder 66, and the spacing of the filament material strips, the lift angle θ angle may vary. For example, in one embodiment, the lift angle θ may be between three and 45 degrees. In another embodiment, the lift angle θ may be between three and ten degrees. The lift angle θ may also vary as the air pressure in the bladder changes and the user applies pressure against the bladder 66 when seated.

Figure 12 is a section view through section 12-12 of Figure 10 when the bladder 66 is inflated. As shown in Figure 12, the side portions 74 have an inflated thickness that is greater than the thickness of the center portion 72. As illustrated here, the intermediate thickness of the center portion 72 is less than the thickness of the side portions 74. While the center portion 72 may include an angled support surface 110, even the larger lower thickness D1 may be less than the inflated thickness of the side portions 74, as shown in Figure 12.

The adjustable thoracic support structure 70 can be moved in the vertical or upright direction Y to adjust for the specific height, body proportions and comfort preferences of the user. In one embodiment, the thoracic support structure 70 can travel in the upright direction Y on guide rails 200, as shown in Figures 13-16. The thoracic support structure 70 may also be adjustable and locked in the upright direction Y with a locking member such as an adjustment knob 202 that applies pressure or impinges on the guide rails 200. In another embodiment, the thoracic support structure 70 may be adjustable with a screw-driven pressure adjustment feature that provides a substantially infinite adjustment and locking positions. However, any suitable adjustment mechanism and locking device may be used to position the thoracic support structure 70.

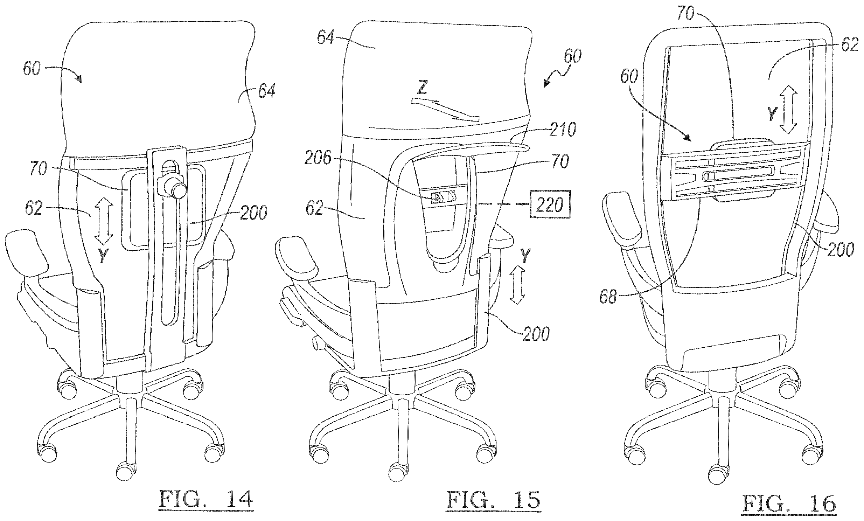

Figure 15 illustrates another embodiment of the adjustable seating support system 60. In the embodiment shown in Figure 15, movements in the upright direction Y can also be controlled by pinch activated release tabs 206. The released tabs 206 may be spring-loaded to lock the position of the thoracic support structure 70 when released. Figure 15 illustrates an adjustable seating support system 60 includes a cover 210 to conceal the release tabs 206 or any other adjustment mechanisms in the adjustable seating support system 60.

The adjustable seat support system 60 may also include a remote control system 220 to control the position of the thoracic support structure 70 so that the user can position the thoracic support structure 70 while seated in order to provide optimal ergonomic support. The remote control system 220 may include a power mechanism or a cable system, or any suitable system for providing remote control.

In another embodiment as shown in Figure 16, the adjustable seat support system 60 may extend across the entire width of the primary seatback 62. For example, the back strap 68 may extend across the width of the seatback 62 and be adapted to slide along the guide rails 200 in the upright direction Y. The guide rails 200 may be integrally formed in a support frame of the seatback. The seat frame may include notches or other adjustment device to securely position the back strap 68 at various positions in the upright direction Y.

As further illustrated in Figure 16, the thoracic support structure 70 may be disposed along a central portion of the back strap 68. When pressure is applied by a user to the thoracic support structure 70, it may expand in a transverse direction X along the back strap 68, as illustrated in Figures 6B and 9B above, for example.

The details, designs, variants, aspects and embodiments shown and described herein are applicable to automotive, other vehicle, and non-regulated seating.

While exemplary embodiments are described above, it is not intended that these embodiments describe all possible forms of the invention. Rather, the words used in the specification are words of description rather than limitation, and it is understood that various changes may be made without departing from the scope of the invention. Additionally, the features of various implementing embodiments may be combined to form further embodiments of the invention within the limitations of the claims.

## Claims

1. An air bladder assembly comprising:
an inflatable thoracic support bladder (66) adapted to be secured to a seatback (62), the inflatable bladder (66) having a forward surface (76) and a rearward surface (78) and comprising:
a center portion (72) extending in an upright direction and oriented to be positioned adjacent the seatback (62) to align adjacent a thoracic region of a user's spine;
a pair of side portions (74) each disposed adjacent to and connected with the center portion (72); and
a plurality of filaments (88) extending between the forward seating surface (76) and the rearward surface (78) of the bladder (66) in the center portion (72), whereby upon inflation the center portion (72) has a first stiffness that is greater than a second stiffness of the pair of side portions (74) to support the user's spine along the center portion (72).

2. The air bladder assembly of claim 1, wherein the pair of side portions (74) comprise a chamber without filaments (88); and
wherein the filaments (88) in the center portion (72) limit a center inflated thickness in a foreaft direction such that a side inflated thickness of the support bladder (66) is greater than the center inflated thickness.

3. The air bladder assembly of claim 1 or 2, wherein the filaments (88) in the center portion (72) are positioned in a plurality of strips (100) each spaced apart by a region without filaments (88).

4. The air bladder assembly of claim 3 wherein the plurality of strips (100) extends in an upright direction and are spaced apart in a transverse direction, or wherein the plurality of strips (100) extends in a transverse direction and are spaced apart in an upright direction.

5. The air bladder assembly of one of the preceding claims, wherein the filaments (88) do not extend along the entire length in an upright direction thereby defining a lower portion with a stiffness less than the first stiffness.

6. The air bladder assembly of one of the preceding claims, wherein a length of the filaments (88) in the fore-aft direction decreases in the upright direction to define an angled forward seating surface such that the support bladder (66) has a lower thickness being greater than an upper thickness when inflated.

7. The air bladder assembly of one of the preceding claims, wherein a lift angle (θ) is defined between the rearward surface (78) and the angled forward seating surface (76).

8. The air bladder assembly of one of the preceding claims, wherein the filaments (88) permit fluid distribution as the support bladder (66) is inflated.

## Patentansprüche

1. Luftkammeranordnung, mit:
einer aufblasbaren Bruststützluftkammer (66), die zur Befestigung an einer Sitzrückenlehne (62) ausgebildet ist, wobei die aufblasbare Luftkammer (66) eine Vorderseitenfläche (76) und eine Rückseitenfläche (78) hat und aufweist:
einen zentralen Bereich (72), der sich in einer Aufwärtsrichtung erstreckt und so orientiert ist, dass er benachbart zu der Sitzrückenlehne (62) angeordnet und benachbart zu einem Brustgebiet einer Wirbelsäule eines Benutzers ausgerichtet ist;
zwei Seitenbereiche (74), die jeweils benachbart zu und in Verbindung mit dem zentralen Bereich (72) angeordnet sind; und
mehrere Fäden (88), die sich zwischen der Vorderseitenfläche (76) und der Rückseitenfläche (78) der Luftkammer (66) in dem zentralen Bereich (72) erstrecken, wobei beim Aufblasen der zentrale Bereich (72) eine erste Steifigkeit hat, die größer ist als eine zweite Steifigkeit der beiden Seitenbereiche (74) derart, dass das Rückgrat des Benutzers entlang des zentralen Bereiches (72) gestützt wird.

2. Luftkammeranordnung nach Anspruch 1, wobei die beiden Seitenbereiche (74) eine Kammer ohne Fäden (88) aufweisen; und
wobei die Fäden (88) in dem zentralen Bereich (72) eine Dicke der Mitte in aufgeblasenem Zustand in einer Vorwärts- Rückwärtsrichtung derart begrenzen, dass eine Dicke auf einer Seite im aufgeblasenen Zustand der Stützluftkammer (66) größer ist als die Dicke der Mitte im aufgeblasenen Zustand.

3. Luftkammeranordnung nach Anspruch 1 oder 2, wobei die Fäden (88) in dem zentralen Bereich (72) in mehreren Streifen (100) angeordnet sind, die jeweils durch ein Gebiet ohne Fäden (88) voneinander beabstandet sind.

4. Luftkammeranordnung nach Anspruch 3, wobei die mehreren Streifen (100) sich in einer aufrechten Richtung erstrecken und in einer Querrichtung beabstandet sind, oder wobei die mehreren Streifen (100) sich in einer Querrichtung erstrecken und in einer aufrechten Richtung beabstandet sind.

5. Luftkammeranordnung nach einem der vorhergehenden Ansprüche, wobei die Fäden (88) sich nicht über die gesamte Länge in einer aufrechten Richtung erstrecken, wodurch ein unterer Bereich mit einer Steifigkeit gebildet wird, die kleiner als die erste Steifigkeit ist.

6. Luftkammeranordnung nach einem der vorhergehenden Ansprüche, wobei eine Länge der Fäden (88) in der Vorwärts-Rückwärts-Richtung in der aufrechten Richtung so abnimmt, dass eine angewinkelte Vorderseitensitzfläche derart gebildet ist, dass die Stützluftkammer (66) im aufgeblasenen Zustand eine untere Dicke hat, die größer ist als eine obere Dicke.

7. Luftkammeranordnung nach einem der vorhergehenden Ansprüche, wobei ein Hebewinkel (θ) zwischen der Rückseitenfläche (78) und der angewinkelten Vorderseitensitzfläche (76) gebildet ist.

8. Luftkammeranordnung nach einem der vorhergehenden Ansprüche, wobei die Fäden (88) beim Aufblasen der Stützluftkammer (66) eine Fluidverteilung ermöglichen.

## Revendications

1. Ensemble vessie d'air comprenant :
une vessie de soutien thoracique gonflable (66) adaptée pour être solidement fixée à un dossier (62), la vessie gonflable (66) présentant une surface avant (76) et une surface arrière (78) et comprenant :
une partie centrale (72) s'étendant dans un sens vers le haut et orientée pour être positionnée de manière adjacente au dossier (62) pour s'aligner de manière adjacente à une région thoracique d'une colonne d'un utilisateur ;
une paire de parties latérales (74) disposées chacune de manière adjacente à et reliées à la partie centrale (72) ; et
une pluralité de filaments (88) s'étendant entre la surface d'assise d'avant (76) et la surface arrière (78) de la vessie (66) dans la partie centrale (72), moyennant quoi lors du gonflage la partie centrale (72) présente une première rigidité qui est supérieure à une seconde rigidité de la paire de parties latérales (74) pour soutenir la colonne de l'utilisateur le long de la partie centrale (72).

2. Ensemble vessie d'air selon la revendication 1, la paire de parties latérales (74) comprenant une chambre sans filaments (88) ; et
les filaments (88) dans la partie centrale (72) limitant une épaisseur gonflée centrale dans un sens avant-arrière de sorte qu'une épaisseur gonflée latérale de la vessie de soutien (66) est supérieure à l'épaisseur gonflée centrale.

3. Ensemble vessie d'air selon la revendication 1 ou 2, les filaments (88) dans la partie centrale (72) étant positionnés dans une pluralité de bandes (100) écartés chacun d'une région sans filaments (88).

4. Ensemble vessie d'air selon la revendication 3, la pluralité de bandes (100) s'étendant dans un sens vertical et sont écartées dans un sens transversal, ou la pluralité des bandes (100) s'étendant dans un sens transversal et sont écartées dans un sens vertical.

5. Ensemble vessie d'air selon l'une des revendications précédentes, les filaments (88) ne s'étendant pas le long de la longueur entière dans un sens vertical définissant ainsi une partie inférieure ayant une rigidité inférieure à la première rigidité.

6. Ensemble vessie d'air selon l'une des revendications précédentes, une longueur des filaments (88) dans le sens avant-arrière baisse dans le sens vertical pour définir une surface d'assise avant inclinée de sorte que la vessie de soutien (66) présente une épaisseur inférieure qui est supérieure à une épaisseur supérieure lorsqu'elle est gonflée.

7. Ensemble vessie d'air selon l'une des revendications précédentes, un angle de levée (θ) étant défini entre la surface arrière (78) et la surface d'assise avant inclinée (76).

8. Ensemble vessie d'air selon l'une des revendications précédentes, les filaments (88) permettant la distribution de liquide lorsque la vessie de soutien (66) est gonflée.
